# EUROPEAN PATENT SPECIFICATION

(11) **EP 3 397 060 B1**
(45) Date of publication and mention of the grant of the patent: **20.01.2021**
(21) Application number: 16871778.3
(22) Date of filing: 15.12.2016
(51) Int. Cl.: A01N 59/16, A01N 25/34, D06M 15/263, D06M 16/00, C09D 139/00, A01P 1/00, D06M 101/06, D06M 101/32, D06M 101/38

(54) **ANTIMICROBIAL COMPOSITION FOR FABRIC TREATMENT**
ANTIMIKROBIELLE ZUSAMMENSETZUNG ZUR STOFFBEHANDLUNG
COMPOSITION ANTIMICROBIENNE POUR LE TRAITEMENT DES TISSUS

(30) Priority: 30.12.2015 US 201562272891 P
(43) Date of publication of application: 07.11.2018
(73) Proprietor: Rohm and Haas Company, Philadelphia, PA 19106 (US)
(72) Inventor: HUSSEIN, Ahmed H., Collegeville PA 19426 (US); MITCHELL, Nicholas P., Collegeville PA 19426 (US)
(74) Representative: Houghton, Mark Phillip
(86) International application number: PCT/US2016/066794
(87) International publication number: WO 2017/116727

(56) References cited:
- EP-A1- 2 228 486
- EP-A1- 2 228 487
- EP-A1- 2 434 048
- EP-A2- 1 584 235
- EP-A2- 1 925 720

## Description

The present invention relates to an improved polymer composition and a treated fabric.

Silver ion is attributed as a safe anti-microbial solution for textile applications. Many companies in the textile industry are developing innovative controllable silver ion delivery systems. It is desirable to have a delivery system which will release silver ions when microbes come in contact with the textile products to prevent microbial growth and unpleasant odors. Polymer delivery systems have been used in the art to release silver however these delivery systems of the art when applied to fabrics can result in uneven distribution of silver across the textiles surface, typically in the padding process.

In the padding process fabric is pulled through a trough containing the metal-polymer solution which is then absorbed onto the surface of the textile. This process can lead to uneven distribution of metal ion if the polymer-metal absorption rate does not match the padding speed. This will tend to lead to higher than desired levels of metal ion in the beginning of the process and tailing down as the application bath becomes depleted. Uneven distribution can result in uneven microbial performance, wash durability, and color durability.

US 7390774 discloses one such formulation where silver is applied to textiles. The cited reference describes an antimicrobial composition comprising a metal complexed with a polymer, wherein the metal is selected from copper, silver, gold, tin, zinc and combinations thereof. It has been discovered that while such compositions are efficacious, textiles treated with these compositions sometimes suffer from uneven performance and wash durability.

EP-A1-2228486 discloses a method for fabric treatment at low pH.

Thus, the need exists for a composition which can be applied evenly to a fabric and a method for making the treated fabric.

The present invention solves the problem in the art by providing a polymer bath composition comprising:
a) a first polymer comprising:
   i) 60-90 wt % polymerized units of a monomer X selected from the group consisting of vinylimidazoles, vinylimidazolines, vinylpyridines, vinylpyrroles, and combinations thereof; and
   ii) 10-40 wt % polymerized units of a monomer Y which is an ethylenically unsaturated compound selected from the group consisting of esters of polymerized units of ethylene oxide;
b) a second polymer comprising:
   i) polymerized units of a heterocyclic monomer X selected from N-vinyl imidazole; and
   ii) polymerized units of monomer Y is a non-heterocyclic saturated compound selected from acrylic acid, methacrylic acid, ethyl acrylate, and butyl acrylate and combinations thereof; and
c) silver metal or a silver ion.

The present invention also provides a treated article comprising a fabric comprising the polymer bath composition.

As used herein, "error" or "average error" means the mean absolute percentage error. This is calculated as the average of the absolute value of the difference between the silver measurements at the leading edge, x1, and the target value, x, and absolute value of the difference between an intermediate point, x2, divided by the target value, x. Error equals (|x1-x|+|x2-x|)/2x.

As used herein, "even" or "evenly applied" means that the polymer bath composition when applied to a fabric has an average error less than 1, more preferably less than 0.8, and even more preferably less than 0.5.

As used herein, "fabric" means a woven or nonwoven textile such as cotton, polyester, nylon, lycra, polyolefin and blends thereof. A treated fabric is a fabric that comprises the polymer bath composition. The polymer bath composition is applied to the fabric.

As used herein and in the appended claims, the term "silver" refers to silver metal or a silver ion that is incorporated into an antimicrobial composition of the present invention. While not wanting to be bound as to the oxidation state of the silver (Ag⁰, Ag¹⁺ or Ag²⁺), that is incorporated into the antimicrobial composition, silver may be added to the antimicrobial composition by washing the polymer in a silver solution such as silver nitrate in deionized water ("DI"). Aside from DI, other liquid mediums can also be used such as water, aqueous buffered solutions and aqueous/organic solutions made with water misicible organics such as solvents such as alcohols, surfactants and softeners. Other sources of silver include but are not limited to silver acetate, silver citrate, silver iodide, silver lactate, silver picrate and silver sulfate. The concentration of silver in these solutions can vary from the concentration required to add a known quantity of silver to the antimicrobial composition to a saturated silver solution.

As used herein, "wash durable means" the treated article provides acceptable antimicrobial efficacy after laundering using industry standard methods such as AATCC Test Method 61 or AATCC Test Method 135 (Colorfastness to Laundering: Accelerated) followed by AATCC Test Method 100 (Antibacterial Finishes on Textile Materials: Assessment of).

The use of the term "(meth)" followed by another term such as acrylic, acrylate, acrylamide, etc., as used herein and in the appended claims, refers to, for example, both acrylic and (meth)acrylic; acrylate and methacrylate; acrylamide and methacrylamide; etc. Additionally any acids described in the reference herein also include the salt form and vice versa.

All percentages expressed herein are wt. % or ppm w/w.

According to the present invention there is provided a polymer bath composition. This polymer bath composition comprises a first polymer, a second polymer and silver.

The first polymer of the present invention is a polymer comprising a) 60-90 wt % polymerized units of a monomer X selected from the group consisting of vinylimidazoles, vinylimidazolines, vinylpyridines, vinylpyrroles, and combinations thereof; and (b) 10-40 wt % polymerized units of a monomer Y which is an ethylenically unsaturated compound selected from the group consisting of esters of polymerized units of ethylene oxide.

In some aspects of these embodiments, monomer X is selected from vinylimidazoles, vinylpyridines, derivatives thereof and combinations thereof. In some aspects of these embodiments, monomer X is selected from N-vinylimidazole, 2-vinylpyridine, 4-vinylpyridine and combinations thereof. In some aspects of these embodiments, monomer X is N-vinylimidazole (VI).

Monomer Y is selected from esters of polymerized units of ethylene oxide. In some embodiments of the invention, esters comprising polymerized units of ethylene oxide comprise at least 2 units of ethylene oxide, alternatively at least 3, alternatively at least 4, alternatively at least 5, alternatively at least 6. The number of polymerized ethylene oxide units is calculated from the Mn of the polymerized ethylene oxide chain. In some embodiments of the invention, the esters of polymerized units of ethylene oxide are (meth)acryloyl esters. In some embodiments of the invention, polymerized units of ethylene oxide may be capped with a C₁-C₆ alkyl group on one end. In some embodiments of the invention, polymerized units of ethylene oxide have Mn from 100 to 3000. In some embodiments of the invention, the polymerized units of ethylene oxide have Mn from 200 to 1000, alternatively from 250 to 600, alternatively from 300 to 500. In some aspects of these embodiments, the copolymer further comprises other ethylenically unsaturated monomers, e.g., (meth)acrylate esters, vinyl esters, (meth)acrylamides. Small amounts of hydrophobic monomers, e.g., higher alkyl (meth)acrylates (e.g., C-4 and higher), may be present to the extent they do not compromise water solubility. (Meth)acrylate esters may include esters of mixed ethylene/propylene oxides, providing that ethylene oxide residues are at least 50 wt % of the ethylene/propylene oxide residues (alternatively at least 75%, alternatively at least 90%) or that the esters of mixed ethylene/propylene oxide residues are no more than 20 wt % of the copolymer, alternatively no more than 15%, alternatively no more than 10%. In some embodiments of the invention, mixed ethylene/propylene oxide residues have Mn of at least 150, alternatively at least 300.

The second polymer of the present invention is a polymer comprising: (a) polymerized units of a heterocyclic monomer X selected from selected from N-vinyl imidazole; and (b) polymerized units of monomer Y is a non-heterocyclic saturated compound selected from acrylic acid, methacrylic acid, ethyl acrylate, and butyl acrylate and combinations thereof. The polymer comprises X and Y in a ratio of 95:5 to 5:95; alternatively 80:20 to 20:80; alternatively 60:40 to 40:60. Butyl acrylate is present in the copolymer in the amount from 5% to 50%, alternatively from 5% to 40%, and further alternatively from 5% to 25%. Acrylic acid is present in the copolymer in the amount from 5% to 30%, alternatively 5% to 20%, alternatively 5% to 10%.

The heterocyclic monomer is N-vinylimidazole.

Silver metal or a silver ion may be present in the polymer bath composition at 10-100 ppm, alternatively 20-80 ppm, further alternatively 30-50 ppm of the solution. Polymer with metal ion ligands may be present in 0.005-0.5%, alternatively 0.01-0.4%, further alternatively 0.03-0.3%% of the solution. The polymer bath composition of the present invention has a pH in the range of 4-9 or alternatively 5-8.

This polymer bath composition is then applied to a fabric to create a treated fabric. The application of polymer bath composition may be accomplished by any known method in the art. Exhaustion and conventional padding processes are examples of suitable methods that may be used in the present invention. The preferred method of the present invention is padding.

Following the application of solution, the fabric may then be dried. Conventional drying methods may be used. The fabric is said to be "dry" when the weight of the fabric is equal to its initial weight before treatment. In one embodiment of the present invention, the treated fabric is dry.

Some embodiments of the present invention will now be described in detail in the following Examples. All fractions and percentages set forth below in the Examples are by weight unless otherwise specified.

### Examples

### Materials and Methods Used to Prepare a Treated Fabric

### Materials:

| Polymer | | |
|---|---|---|
| Formulation | ID | Description |
| Example 1 | QR-1719 | 45VI/40BA/15AA |
| Example 2 | QR-1831 | 75VI/25Pegma |
| Example 3 | KM5497 | 60VI/25BA/15AA |
| Example 4 | AR8923 | 30VI/70Pegma |
| Example 5 | AR8924 | 30VP/70Pegma |

| Fabrics | ID | Description | WPUR |
|---|---|---|---|
| Polyester | TIC 730 | SDL Atlas - Item # 400000: TIC 730 100% Polyester Interlock Knit | 125% |
| Cotton | TIC 460 | SDL Atlas - Item # 200789: TIC 460 100% Cotton Interlock Knit | 80% |
| Polyester-Lycra | GU59913-BLK | Polyester-Lycra Blend - 4.4oz Jersey Knit Black obtained from Guilford Mills, in PA | 125% |
| Nylon | TIC 300 | SDL Atlas: TIC 300 100% Spun Nylon 6.6 Plain Weave | 55% |

### Methods:

### Fabric Treatment

A Lab scale padding machine from Werner Mathis AG (Model: CH-8155 VFM28888) was used to apply finishing chemicals to fabric samples.

First the wet-pick up rate (WPUR) is determined to calculate the concentration of antimicrobial formulation solution needed to achieve a target silver loading on the dried textile. The roller pressure is set to 3 barg initially. Then a 12" by 16" swatch of fabric is weighed out. Most fabric swatches will weigh between 10 to 15 grams. Polyester is typically 12 grams and heavy cotton is typically 15 grams. The swatch is soaked in a deionized water bath for 3 to 8 seconds until it has fully absorbed the water. Immediately after, the wet fabric is passed through the spinning rollers at the 3 barg pressure setting. The fabric is then reweighted to determine the increase in weight due to absorption of water. The WPUR is calculated by the difference in the weight of the wet fabric after going through the rollers and the dried fabric weight divided by the dried fabric weight. Polyester fabric typically will weigh around 27 grams after and 12 grams before for a calculated wet pick-up rate of (27-12)/12 or 125%. Cotton typically weighs 15 grams dried and 27 grams after the roller for a calculated wet pick-up rate of (27-15)/15 or 80%. If the wet pick-up rate does not match the desired value the pressure of the padding rollers is adjusted up or down to achieve the desired values. Polyester-Lycra blend fabric is very similar to standard Polyester fabric. Weights for polyester-lycra blend are typically around 27 grams after and 12 grams before for a calculated wet pick-up rate of (27-12)/12 or 125%. Weights for Nylon fabric are typically around 18.6 grams after and 12 grams before for a calculated wet pick-up rate of (18.6-12)/12 or 55%.

Second, the application bath solutions are prepared to treat each textile swatch. The concentration silver in the bath is calculated based on the initial concentrate solution and the wet pick-up rate. The calculation of bath concentration of an antimicrobial formulation is calculated by dividing the target silver level by the active loading in the antimicrobial formulation and then dividing by the wet pick-up rate. For example to target a theoretical 30 ppm of silver on polyester fabric with a 125% wet pick-up rate using an antimicrobial formulation with 1000 ppm of silver, would require 30 ppm Ag target/1000ppm Ag in formulation/1.25 WPUR^{∗}100%, or 2.4g antimicrobial formulation into 100 g. On cotton fabric with a 80% wet pick-up rate the calculation would be 30 ppm Ag target/1000ppm Ag antimicrobial formulation/0.80 WPUR^{∗}100%, or 3.75g antimicrobial formulation into 100g.

The 30 ppm silver target fabric loading for polyester would be simply formulated by weighing out 2.4 grams of the antimicrobial formulation and mixing it into 97.6 grams of deionized water, and for cotton by weighing out 3.75 grams of antimicrobial formulation and mixing into 96.25 grams of deionized water.

Lastly, the treatment of each fabric was carried out in the padding machine using the pressure settings determined above to achieve the desired wet pick-up rate for each fabric swatch. Each silver solution was poured into the trough on the padding machine prior to treatment. Then fabric samples were dipped into silver solutions for 3 to 8 seconds until soaked. Immediately, the wet fabric was then passed through the rollers to achieve the desired wet pick-up weights. Then fabrics were placed onto a device that stretches the fabric taught and dried in a convection oven at 150°C for 2 minutes.

### Polymer Synthesis Examples:

Examples 1-5 describe preparation of the polymers used in later examples.

Table I describes the monomer composition of each example.

### Example 1: Preparation of Polymer Product 1

A polymer product was prepared using the following process:
(a) 200 proof ethanol (2085 lbs.) was charged to a 2000 gallon jacketed reactor equipped with a 2-tiered pitch blade agitator and reflux condenser;
(b) The contents were heated to reflux at 79-80°C with agitation at atmospheric pressure using hot oil in the jacket of a temperature between 100 and 120°C;
(c) A mixture of butyl acrylate (1260 lbs.), 1-vinylimidazole (1418 lbs.), and glacial acrylic acid (472 lbs.) were added to the kettle over a period of 3 hours at a rate of 17.5 lb./min. Simultaneously, 1-amyl peroxypivilate (Trig 125-C-75) (54 lbs.) in 200 proof ethanol (1370 lbs.) was fed to the kettle at a rate of 7.91 lb./min for a period of 3 hours. The contents were maintained at 79-80°C with agitation;
(d) The monomer tank was rinsed with 200 proof ethanol (362 lbs.) and added to the product of (c);
(e) The product of (d) was maintained at 79-80°C with constant agitation for 30 minutes;
(f) 1-amyl peroxypivilate (Trig 125-C-75) (80 lbs.) in 200 proof ethanol (270 lbs.) was added to the product of (e) at a rate of 11.7 lb./min;
(g) The product of (f) was maintained at 79-80°C with constant agitation for 30 minutes;
(h) 1-amyl peroxypivilate (Trig 125-C-75) (80 lbs.) in 200 proof ethanol (270 lbs.) was added to the product of (g) at a rate of 11.7 lb./min;
(i) The product of (h) was maintained at 79-80°C with constant agitation for 30 minutes;
(j) 200 proof ethanol (2090 lbs.) was added to the product of (i);
(k) The heading source was removed and the product of (j) was allowed to cool to room temperature resulting in a polymer product with 45% 1-vinylimidazole.

### Example 2: Preparation of Polymer Product 2

A polymer product was prepared using the following process:
(a) DI water (140 g) was charged to a 1 liter reactor equipped with a stirrer, dropping funnel and a condenser set at 5°C;
(b) The contents were heated at 85°C with agitation;
(c) A mixture of DI water (78.1 g), 1-vinylimidazole (114.2 g), and PEGMA (38.1 g) were added to the kettle over a period of 2 hours at a rate of 1.83 mL/min. Starting simultaneously, 2,2'-Azobis(2-methylpropionitrile) (VAZO) (6.4 g) in DI water (133.7 g) and ammonium hydroxide (28% as ammonia) (7.6 grams) was fed to the kettle at a rate of 1.28 mL/min for a period of 3 hours. The contents were maintained at 85°C with agitation;
(d) The product of (c) was maintained at 85°C with constant agitation for 200 minutes;
(e) The heading source was removed and the product of (d) was allowed to cool to room temperature resulting in the polymer product with 75% 1-vinylimidazole.

Example 3: Preparation of example polymer 3 was carried out similarly to example polymer 1 but adjustments to the monomer ratios from 45% vinyl imidazole to 60% vinyl imidazole and from 40% butyl acrylate to 25% butyl acrylate with the remained as acrylic acid.

Example 4 and 5: Preparation of example polymers 4 and 5 were carried out similarly to example polymer 2. In example 4, vinyl imidazole was reduced from 75% to 30% with the remaining monomer as polyethylene glycol methyl ether methacrylate. In Example 5 75% vinyl imidazole was replaced with 30% 4-vinylpyridine with the remaining monomer as polyethylene glycol methyl ether methacrylate.

**Table I**

| | Monomer Acronym | Example Polymer | Example Polymer | Example Polymer | Example Polymer | Example Polymer |
|---|---|---|---|---|---|---|
| Monomer Composition | | 1 | 2 | 3 | 4 | 5 |
| 1-vinylimidazole | VI | 45% | 75% | 60% | 30% | |
| Poly(ethylene glycol) | PEGMA | | | | | |
| methyl ether | | | | | | |
| methacrylate (Mn ∼400) | | | 25% | | 70% | 70% |
| glacial acrylic acid | AA | 15% | | 15% | | |
| butyl acrylate | BA | 40% | | 25% | | |
| 4-vinylpyridine | VP | | | | | 30% |
| % Polymer Solids | - | 32% | 30% | 30% | 30% | 30% |

### Antimicrobial Formulations:

### Examples and Comparative Examples 6-13: Composition of antimicrobial formulations

Examples and Comparative Examples 6-13 have compositions described below in Table II. Each of the antimicrobial formulation examples contains 1000 ppm of silver ion which is added as a solution of 50% silver nitrate in water. Each of the formulations were prepared by combining the water and polymer(s) together and mixing thoroughly first. Then adding the ammonia, which is a 28% concentration of ammonia in water. Lastly, the silver nitrate solution is slowly mixed into the polymer solutions to achieve a clear single phase solution.

**Table II: Antimicrobial Formulation Examples**

| Component | Example 6* | Example 7* | Example 8 | Example 9 | Example 10 | Example 11* | Example 12* | Example 13 |
|---|---|---|---|---|---|---|---|---|
| DI Water | 93.10 | 94.86 | 94.08 | 93.54 | 94.42 | 91.74 | 91.28 | 94.47 |
| NH3 (28%) | 1.70 | 1.70 | 1.70 | 1.70 | 1.70 | 1.70 | 1.70 | 1.70 |
| Polymer Example 1 | 4.88 | 0.00 | 2.34 | 3.66 | 1.22 | 2.34 | 2.34 | 0.00 |
| Polymer Example 2 | 0.00 | 3.12 | 1.56 | 0.78 | 2.34 | 0.00 | 0.00 | 1.56 |
| Polymer Example 3 | 0.00 | 0.00 | 0.00 | 0.00 | 0.00 | 0.00 | 0.00 | 1.95 |
| Polymer Example 4 | 0.00 | 0.00 | 0.00 | 0.00 | 0.00 | 3.90 | 0.00 | 0.00 |
| Polymer Example 5 | 0.00 | 0.00 | 0.00 | 0.00 | 0.00 | 0.00 | 4.37 | 0.00 |
| AgNO3 (50%) | 0.31 | 0.31 | 0.31 | 0.31 | 0.31 | 0.31 | 0.31 | 0.31 |
| Total | 100.00 | 100.00 | 100.00 | 100.00 | 100.00 | 100.00 | 100.00 | 100.00 |

| | | | | | | | | |
|---|---|---|---|---|---|---|---|---|
| * Comparative Examples | | | | | | | | |

### Fabric Treatment Examples

Bath formulations using antimicrobial formulations in Examples and Comparative Examples 6 through 13 were generated by each Antimicrobial Formulation in Table II to the desired bath concentration in deionized water. For Examples and Comparative Examples 14 through 21 on polyester fabric the bath dilution was set at 30 ppm Ag, or 3 grams into 97 grams of deionized water. The wet pickup rate for the polyester fabric is 1.25. Therefore the expected silver level is 30^{∗}1.25 or 38 ppm Ag on fabric. For Examples and Comparative Examples 22 through 29 on cotton fabric the dilution level was 62 ppm Ag, or 6.2 grams into 93.8 grams of deionized water. The wet pickup rate for the cotton fabric is 0.8. Therefore the expected silver level for Examples and Comparative Examples 22 through 29 on cotton is 62^{∗}0.8 or 50 ppm Ag. For Examples and Comparative Examples 30 through 37 on polyester-lycra blend the bath dilution was set at 30 ppm Ag, or 3 grams into 97 grams of deionized water. The wet pickup rate for the polyester-lycra fabric is 1.25. Therefore the expected silver level is 30^{∗}1.25 or 38 ppm. For Examples and Comparative Examples 38 through 45 on Nylon fabric the bath dilution was set at 30 ppm Ag, or 3 grams into 97 grams of deionized water. The wet pickup rate for the nylon fabric is 0.55. Therefore the expected silver level is 30^{∗}0.55 or 17 ppm.

Finally, formulations were pH adjusted to 6 using dilute acetic acid, pad applied, and dried to fix the polymer complex. These baths were used to generate the treated fabric comparative examples 14-45.

Comparative fabric examples 14 and 15 treated polyester fabric were utilized to demonstrate inconsistency of silver application across width and length. Fabric example 16 demonstrates the invention. Strips were cut from each fabric at 0, 5, 10, 15, and 20 ft. increments of padded fabric for metal analysis. The data is summarized in Tables III-VI for treated polyester Examples and Comparative Examples 14-16. Metal concentration values at each increment are reported in parts per million for polyester fabric treated with Example and Comparative Example formulations 6, 7, and 8 respectively.

**Table III: Comparative Example 14 - Formulation Comparative Example 6 on Polyester**

| Measured Silver in mg Silver / kg fabric (ppm Ag) | | | | | |
|---|---|---|---|---|---|
| Length (ft.) | Left | Middle | Right | Width Averages | Width StdDev. |
| 1 | 50 | 60 | 56 | 55 | 4.73 |
| 5 | 45 | 47 | 46 | 46 | 0.91 |
| 10 | 43 | 45 | 43 | 44 | 1.28 |
| 15 | 46 | 46 | 47 | 46 | 0.30 |
| 20 | 44 | 44 | 43 | 44 | 0.64 |
| Length Averages | 46 | 48 | 47 | - | - |
| Length Stdev. | 2.8 | 6.4 | 5.4 | - | - |

**Table IV: Comparative Example 15 - Formulation Comparative Example 7 on Polyester**

| Measured Silver in mg Silver / kg fabric (ppm Ag) | | | | | |
|---|---|---|---|---|---|
| Length | Left | Middle | Right | Average | StdDev. |
| 1 | 101 | 108 | 111 | 107 | 5.20 |
| 5 | 78 | 84 | 60 | 74 | 12.46 |
| 10 | 44 | 37 | 37 | 39 | 4.05 |
| 15 | 25 | 21 | 23 | 23 | 1.84 |
| 20 | 20 | 11 | 6 | 12 | 7.10 |
| Average | 54 | 52 | 47 | | |
| Stdev. | 35.2 | 41.8 | 41.0 | | |

**Table V: Example 16 - Formulation Example 8 on Polyester**

| Measured Silver in mg Silver / kg fabric (ppm Ag) | | | | | |
|---|---|---|---|---|---|
| Length | Left | Middle | Right | Average | StdDev. |
| 1 | 49 | 52 | 51 | 50 | 1.58 |
| 5 | 46 | 47 | 47 | 47 | 0.36 |
| 10 | 47 | 47 | 48 | 47 | 0.86 |
| 15 | 48 | 47 | 50 | 48 | 1.45 |
| 20 | 40 | 42 | 44 | 42 | 2.21 |
| Average | 46 | 47 | 48 | | |
| Stdev. | 3.6 | 3.5 | 2.7 | | |

Examples and Comparative Examples 14-16 are summarized in Table VI. Averages and standard deviations have been calculated across both fabric width and length at several fabric points. Table VI demonstrates greater variability on early sections of treated polyester across length.

**Table VI: Width vs Length Deviations**

| Measured Silver in mg Silver / kg fabric (ppm Ag) | | | |
|---|---|---|---|
| Calculation | Comparative | Comparative | Example 16 |
| | Example 14 | Example 15 | |
| Average | 47 | 51 | 47 |
| Stdev - Width | 1.9 | 6.0 | 1.2 |
| Stdev - Length | 4.7 | 36.5 | 3.0 |

To reduce preparation and measurement time, Fabric Examples and Comparative Examples 14-45 (Table VII-X) were compared using metal concentration across only the first 5 feet of fabric at the middle from width standpoint. Each example corresponds to a treated fabric using Antimicrobial Formulation Examples and Comparative Examples 6 through 13 on polyester fabric. Average error was used to articulate the measured differences of formulation (silver) uptake. The error is the absolute value between the measurement and the target treatment calculated value. All Application baths were prepared as described above.

**Table VII: Polyester Fabric**

| Measured Silver in mg Silver / kg fabric (ppm Ag) - Target 38 ppm Ag | | | | | | | | |
|---|---|---|---|---|---|---|---|---|
| Example | Example 14* | Example 15* | Example 16 | Example 17 | Example 18 | Example 19* | Example 20* | Example 21 |
| Formulation | Formulation Example 6* | Formulation Example 7* | Formulation Example 8 | Formulation Example 9 | Formulation Example 10 | Formulation Example 11* | Formulation Example 12* | Formulation Example 13 |
| Length: 1ft | 55 | 107 | 50 | 47 | 66 | 49 | 53 | 38 |
| Length 5ft | 46 | 74 | 47 | 52 | 25 | 37 | 40 | 42 |
| Ave. Error | 0.33 | 1.38 | 0.27 | 0.29 | 0.53 | 0.16 | 0.22 | 0.06 |

| | | | | | | | | |
|---|---|---|---|---|---|---|---|---|
| * Comparative Examples | | | | | | | | |

Table VIII further provides average error for treated article Examples and Comparative Examples 22 through 29 using Example and Comparative Formulations 6 through 13 on cotton fabric.

**Table VIII: Cotton Fabric**

| Measured Silver in mg Silver / kg fabric (ppm Ag) - Target 50 ppm Ag | | | | | | | | |
|---|---|---|---|---|---|---|---|---|
| Example | Example 22* | Example 23* | Example 24 | Example 25 | Example 26 | Example 27* | Example 28* | Example 29 |
| Formulation | Formulation Example 6* | Formulation Example 7* | Formulation Example 8 | Formulation Example 9 | Formulation Example 10 | Formulation Example 11* | Formulation Example 12* | Formulation Example 13 |
| Length: 1ft | 169 | 109 | 90 | 88 | 85 | 56 | 45 | 79 |
| Length 5ft | 80 | 60 | 64 | 77 | 34 | 12 | 28 | 15 |
| Ave. Error | 1.49 | 0.69 | 0.54 | 0.64 | 0.50 | 0.44 | 0.27 | 0.64 |

| | | | | | | | | |
|---|---|---|---|---|---|---|---|---|
| * Comparative Examples | | | | | | | | |

Table IX further provides average error for treated article Examples and Comparative Examples 30 through 37. Formulations again are Examples and Comparative Examples 6 through 13 except on polyester-lycra blend.

**Table IX: Polyester-Lycra Blend Fabric**

| Measured Silver in mg Silver / kg fabric (ppm Ag) - Target 38 ppm Ag | | | | | | | | |
|---|---|---|---|---|---|---|---|---|
| Example | Example 30* | Example 31 * | Example 32 | Example 33 | Example 34 | Example 35* | Example 36* | Example 37 |
| Formulation | Formulation Example 6* | Formulation Example 7* | Formulation Example 8 | Formulation Example 9 | Formulation Example 10 | Formulation Example 11* | Formulation Example 12* | Formulation Example 13 |
| Length: 1ft | 21 | 69 | 53 | 44 | 49 | 40 | 38 | 47 |
| Length 5ft | 23 | 65 | 40 | 35 | 22 | 30 | 29 | 24 |
| Ave. Error | 0.42 | 0.76 | 0.22 | 0.12 | 0.36 | 0.13 | 0.12 | 0.30 |

| | | | | | | | | |
|---|---|---|---|---|---|---|---|---|
| * Comparative Examples | | | | | | | | |

Lastly, Table X provides average error for treated article Examples and Comparative Examples 38 through 45 using Examples and Comparative Examples 6 through 13 treated on nylon fabric.

**Table X: Nylon Fabric**

| Measured Silver in mg Silver / kg fabric (ppm Ag) - Target 17 ppm Ag | | | | | | | | |
|---|---|---|---|---|---|---|---|---|
| Example | Example 38* | Example 39* | Example 40 | Example 41 | Example 42 | Example 43* | Example 44* | Example 45 |
| Formulation | Formulation Example 6* | Formulation Example 7* | Formulation Example 8 | Formulation Example 9 | Formulation Example 10 | Formulation Example 11* | Formulation Example 12* | Formulation Example 13 |
| Length: 1ft | 32 | 35 | 22 | 16 | 10 | 14 | 9 | 38 |
| Length 5ft | 9 | 27 | 10 | 19 | 14 | 14 | 6 | 16 |
| Ave. Error | 0.68 | 0.83 | 0.35 | 0.10 | 0.29 | 0.16 | 0.54 | 0.64 |

| | | | | | | | | |
|---|---|---|---|---|---|---|---|---|
| * Comparative Examples | | | | | | | | |

Table XI summarizes the four fabrics types treated using Example and Comparative Examples formulations 6 through 13. The error from each fabric was averaged together to further understand the combined impact of each formulation across all fabric types. A 95% confidence interval on the mean is calculated using the standard deviations. Comparative Example 6 and Example 7 formulations represent single polymer formulations. Formulation Examples 8 through 10 represent differing molar ratios of 1:1, 3:1, and 1:3 of N-vinylimidazole using both polymer examples 1 to 2. The confidence intervals on the average area for each of the three middle ratios (Example 8, 9, 10) are below the confidence intervals of Comparative Examples 6 and 7. This demonstrates statistically that the combination of Example Polymers 1 and 2 ranging in molar ratios of N-vinylimidazole from 25%/75% to 75%/25% results reduced average error of the target treatment level compared to either polymer alone.

Furthermore, Formulation Examples 10, 11, and 12 evidence that alternate polymer combinations can be utilized to yield equal or improved average errors across fabrics when compared to individual Polymer Comparative Examples 6 and 7.

**Table XI: Summary of Average Errors for Silver**

| Formulation | Formulation Example 6* | Formulation Example 7* | Formulation Example 8 | Formulation Example 9 | Formulation Example 10 | Formulation Example 11* | Formulation Example 12* | Formulation Example 13 |
|---|---|---|---|---|---|---|---|---|
| Polyester | 0.41 | 1.53 | 0.30 | 0.29 | 0.53 | 0.16 | 0.22 | 0.06 |
| Cotton | 1.49 | 0.69 | 0.54 | 0.64 | 0.50 | 0.44 | 0.27 | 0.64 |
| Polyester-Lycra Blend | 0.42 | 0.76 | 0.22 | 0.12 | 0.36 | 0.13 | 0.12 | 0.30 |
| Nylon | 0.68 | 0.83 | 0.35 | 0.10 | 0.29 | 0.16 | 0.54 | 0.64 |
| Average | 0.75 | 0.95 | 0.35 | 0.29 | 0.42 | 0.22 | 0.29 | 0.41 |
| Stdev | 0.51 | 0.39 | 0.13 | 0.25 | 0.12 | 0.15 | 0.18 | 0.28 |
| Polymer 1 VI Mol/ VI Mol Total | 1.00 | 0.00 | 0.48 | 0.75 | 0.25 | 0.48 | 0.48 | 0.48 |
| 95% Confidence Interval | 0.35 | 0.27 | 0.09 | 0.17 | 0.08 | 0.10 | 0.12 | 0.20 |
| 95% Lower Limit | 0.57 | 0.82 | 0.31 | 0.20 | 0.38 | 0.17 | 0.22 | 0.31 |
| 95% Upper Limit | 0.93 | 1.09 | 0.40 | 0.38 | 0.46 | 0.27 | 0.35 | 0.51 |

| | | | | | | | | |
|---|---|---|---|---|---|---|---|---|
| * Comparative Examples | | | | | | | | |

## Claims

1. A polymer bath composition comprising:
a) a first polymer comprising:
i) 60-90 wt % polymerized units of a monomer X selected from the group consisting of vinylimidazoles, vinylimidazolines, vinylpyridines, vinylpyrroles, and combinations thereof; and
ii) 10-40 wt % polymerized units of a monomer Y which is an ethylenically unsaturated compound selected from the group consisting of esters of polymerized units of ethylene oxide;
b) a second polymer comprising:
i) polymerized units of a heterocyclic monomer X selected from N-vinyl imidazole; and
ii) polymerized units of monomer Y is a non-heterocyclic saturated compound selected from acrylic acid, methacrylic acid, ethyl acrylate, and butyl acrylate and combinations thereof; and
c) silver metal or a silver ion.

2. A treated article comprising a fabric comprising the polymer bath composition of claim 1.

3. The treated article of claim 2 wherein the fabric is cotton.

4. The treated article of claim 2 wherein the fabric is polyester.

## Patentansprüche

1. Polymerbadzusammensetzung umfassend:
a) ein erstes Polymer umfassend:
i) 60-90 Gew.-% polymerisierte Einheiten eines Monomers X ausgewählt aus der Gruppe bestehend aus Vinylimidazolen, Vinylimidazolinen, Vinylpyridinen, Vinylpyrrolen und Kombinationen davon; und
ii) 10-40 Gew.-% polymerisierte Einheiten eines Monomers Y, das eine ethylenisch ungesättigte Verbindung ist ausgewählt aus der Gruppe bestehend aus Estern von polymerisierten Einheiten von Ethylenoxid;
b) ein zweites Polymer umfassend:
i) polymerisierte Einheiten eines heterocyclischen Monomers X ausgewählt aus N-Vinylimidazol; und
ii) polymerisierte Einheiten von Monomer Y, das eine nichtheterocyclische gesättigte Verbindung ist ausgewählt unter Acrylsäure, Methacrylsäure, Ethylacrylat und Butylacrylat und Kombinationen davon; und
c) Silbermetall oder ein Silberion.

2. Behandelter Artikel umfassend einen Textilstoff umfassend die Polymerbadzusammensetzung nach Anspruch 1.

3. Behandelter Artikel nach Anspruch 2, wobei der Textilstoff Baumwolle ist.

4. Behandelter Artikel nach Anspruch 2, wobei der Textilstoff Polyester ist.

## Revendications

1. Composition de bain de polymère comprenant :
a) un premier polymère comprenant :
i) 60 à 90 % en poids d'unités polymérisées d'un monomère X sélectionné dans le groupe constitué par les vinylimidazoles, les vinylimidazolines, les vinylpyridines, les vinylpyrroles et des combinaisons de ceux-ci, et
ii) 10 à 40 % en poids d'unités polymérisées d'un monomère Y qui est un composé éthyléniquement insaturé sélectionné dans le groupe constitué par des esters d'unités polymérisées d'oxyde d'éthylène,
b) un second polymère comprenant :
i) des unités polymérisées d'un monomère hétérocyclique X sélectionné parmi le N-vinylimidazole, et
ii) des unités polymérisées d'un monomère Y qui est un composé saturé non hétérocyclique sélectionné parmi l'acide acrylique, l'acide méthacrylique, l'acrylate d'éthyle, l'acrylate de butyle et des combinaisons de ceux-ci, et
c) de l'argent métallique ou un ion argent.

2. Article traité comprenant un tissu comprenant la composition de bain de polymère selon la revendication 1.

3. Article traité selon la revendication 2, dans lequel le tissu est du coton.

4. Article traité selon la revendication 2, dans lequel le tissu est du polyester.
